**Europäisches Patentamt**

**European Patent Office**

**Office européen des brevets**

(11) Veröffentlichungsnummer: **0 166 202**
**A2**

(12) # EUROPÄISCHE PATENTANMELDUNG

(21) Anmeldenummer: **85106267.9**

(22) Anmeldetag: **22.05.85**

(51) Int. Cl.⁴: **H 04 M 1/65**

(30) Priorität: **23.06.84 DE 3423326**

(43) Veröffentlichungstag der Anmeldung: **02.01.86**
**Patentblatt 86/1**

(84) Benannte Vertragsstaaten: **DE FR GB**

(71) Anmelder: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Emmert, Reinhold, Ing. grad., Reiherstrasse 14, D-8510 Fürth (DE)**
Erfinder: **Mittelstädt, Rainer, Ing.grad., Am Kirschgarten 24, D-8510 Fürth-Vach (DE)**

(74) Vertreter: **Kolb, Max, Kurgartenstrasse 37, D-8510 Fuerth/Bayern (DE)**

(54) **Verfahren zur Fernsteuerung eines Telefonanrufbeantworters.**

(57) Bei einem Verfahren zur Fernsteuerung eines Telefonanrufbeantworters, insbesondere zu dessen Fernabfrage, werden in einem vom Anrufbeantworter an einen Anrufer abzugebenden Ansage- oder Ansage- und Codetext mit einem Bestätigungscode ausfüllbare Pausenabschnitte vorgesehen. Während dieser Pausenabschnitte wird der Anrufbeantworter auf Empfang geschaltet und mittels einer als Signalpegeldetektor ausgebildeten Empfängerschaltung des Eintreffen bzw. Ausbleiben beliebiger akustischer Signale als Digitalsignal detektiert. Um festzulegen, in welchen der Pausenabschnitte zur Steuerung bestimmter Gerätefunktionen ein beliebiges akustisches Signal beim Anrufbeantworter eintreffen muß oder nicht, wird den Pausenabschnitten über eine Codierschaltung des Anrufbeantworters ein binäres Codewort zugeordnet.

ACTORUM AG

- 1 -

VERFAHREN ZUR FERNSTEUERUNG EINES
TELEFONANRUFBEANTWORTERS

BESCHREIBUNG

Die Erfindung betrifft ein Verfahren zur Fernsteuerung
eines Telefonanrufbeantworters, insbesondere zu dessen
Fernabfrage, bei dem akustische Signale über eine Fernsprechleitung zum Anrufbeantworter übertragen, in einer
Empfängerschaltung des Anrufbeantworters detektiert und
von einem ebenfalls im Anrufbeantworter angeordneten
Mikrocomputer zur Steuerung bestimmter Gerätefunktionen
ausgewertet werden.

Aus der deutschen Offenlegungsschrift DE-OS 29 39 983
ist eine Einrichtung zur Durchführung eines derartigen Verfahrens bekannt. Dort werden die zur Fernsteuerung des Anrufbeantworters benötigten akustischen Signale mittels eines Code-Senders erzeugt und über einen Lautsprecher in die Sprechmuschel eines Fernsprechapparates eingekoppelt. Die auf diese Weise an den Anrufbeantworter übertragenen akustischen Signale bestehen aus mehreren monofrequenten Basis-Tonsignalen einheitlicher Länge, die entsprechend einem vorgebbaren Bitmuster (Code) zu einer bestimmten monofrequenten Tonsignalfolge zusammengesetzt werden können.

Die Nachteile dieser Einrichtung liegen vor allem in der technisch aufwendigen Art, in der bestimmte Tonsignale bzw. Tonsignalfolgen in einem Code-Sender erzeugt und in einer Empfängerschaltung des Anrufbeantworters selektiert und decodiert werden. Außerdem ist der eine Fernabfrage ausführende Anrufer immer auf das Mitführen eines Code-Senders angewiesen.

Der Erfindung liegt die Aufgabe zugrunde, ein Verfahren der im Oberbegriff des Anspruchs 1 angegebenen Art so weiterzubilden, daß es möglich ist, in einfacher Weise auch ohne Code-Sender eine gegen unberechtigten Zugriff gesicherte Fernsteuerung eines Anrufbeantworters, insbesondere dessen Fernabfrage, durchzuführen.

Diese Aufgabe wird gemäß der Erfindung durch die im Kennzeichen des Anspruchs 1 angegebenen Maßnahmen

gelöst. Vorteilhafte Weiterbildungen der Erfindung sind in den Unteransprüchen gekennzeichnet.

Nach dem Verfahren gemäß der Erfindung wird zur Fernsteuerung des Anrufbeantworters weder ein Code-Sender mit aufwendigen Einrichtungen zur Erzeugung von Tonsignalen, noch ein auf bestimmte Tonfrequenzen und Tonsignalfolgen abgestimmter, selektiver Empfänger zur Erkennung und Decodierung der Tonsignale benötigt. In vorteilhafter Weise ist es möglich, den Anrufbeantworter durch beliebige akustische Signale, die insbesondere auch durch die menschliche Stimme erzeugt werden können, zu steuern. Die Abgabe dieser Signale seitens des Anrufers erfolgt innerhalb vorgegebener Pausenabschnitte, die zwischen bestimmten Textteilen eines vom Anrufbeantworter an den Anrufer abzugebenden Ansagetextes vorgesehen werden. Während dieser Pausenabschnitte schaltet der Anrufbeantworter auf Empfang und prüft mit Hilfe eines Signalpegeldetektors, ob innerhalb dieser Zeiträume irgendwelche akustischen Signale vom Anrufer über die Fernsprechleitung eintreffen oder nicht. Dabei wird im Anrufbeantworter eine bestimmte Schaltfunktion, z. B. Wiedergabe der aufgezeichneten Nachrichten (Fernabfrage), dann ausgelöst, wenn in $m_1$ von z. B. insgesamt m vorgegebenen Pausenabschnitten ein über die Fernsprechleitung übertragenes Signal festgestellt, und in den restlichen $m - m_1$

Pausenabschnitten kein Signal detektiert wird. Ein Codewort (1 Bit pro Pausenabschnitt), das über eine geeignete Codierschaltung eingestellt und den entsprechenden Pausenabschnitten zugeordnet wird, legt fest, in welchen der m Pausenabschnitte vom Anrufer ein beliebiges akustisches Signal abgegeben werden muß, und in welchen Pausenabschnitten kein akustisches Signal erzeugt werden darf, wenn der Anrufer zur Betätigung des Anrufbeantworters berechtigt ist.

Bei m codierbaren Pausenabschnitten ergeben sich grundsätzlich $2^m$ Codiermöglichkeiten, so daß in Abhängigkeit von m eine nahezu beliebig hohe Sicherheit gegen einen unberechtigten Zugriff auf die im Anrufbeantworter gespeicherte Information gegeben ist. Es ist jedoch sinnvoll, nur $2^m$ - 2 Codiermöglichkeiten auszunutzen. Denn, um Störungen bzw. Fehlsteuerungen durch am Ort des Anrufers ständig vorhandene oder auch nicht vorhandene Umweltgeräusche auszuschließen, müssen die Codiermöglichkeiten außer Betracht gelassen werden, bei denen jedes Bit des Binärwortes den gleichen Zustand aufweist.

Zwischen welchen Textteilen des Ansagetextes die codierbaren Pausenabschnitte vorgesehen werden, ist grundsätzlich gleichgültig. Jedoch sollten sie vorzugsweise dort eingefügt werden, wo sie für den Anrufer, der zu einer Fernabfrage berechtigt ist, leicht zu merken sind. Bei dem folgenden Beispiel für einen Ansagetext wären dies beispielsweise die Pausenabschnitte zwischen den Ziffern der bei der Ansage durchgegebenen Teilnehmernummer. Im einzelnen könnte die Ansage wie folgt gestaltet sein:

"Hier automatischer Anrufbeantworter
Null-Neun-Zwei-Acht-Drei-Eins-Vier-Vier-Null
Sie haben drei Minuten Sprechzeit für eine
Nachricht, bitte sprechen Sie jetzt"

Den acht mit "-" gekennzeichneten Pausenabschnitten sei z. B. der 8-stellige Binärcode 00101100 zugeordnet. Um die Wiedergabe aufgezeichneter Nachrichten auszulösen, muß der Anrufer in der dritten, fünften und sechsten Pause ein akustisches Signal abgeben, während er in den ersten beiden, dem vierten und den letzten beiden Pausenabschnitten kein akustisches Signal erzeugen darf. Für den Fall, daß während der gekennzeichneten Pausenabschnitte akustische Signale nicht nach dem angegebenen Codewort beim Anrufbeantworter eintreffen oder ausbleiben, führt der Anrufbeantworter den Ansagetext zu Ende und gibt dem Anrufer Gelegenheit, eine Nachricht aufzusprechen.

Eine vorteilhafte Weiterbildung des Verfahrens gemäß der Erfindung besteht darin, innerhalb des Ansagetextes nur eine geringe Anzahl von mit einem Bestätigungscode ausfüllbaren Pausen vorzusehen (z. B. m = 2) und bei "richtiger Reaktion" des Anrufers während dieser Pausen (Abgabe eines akustischen Signals oder nicht), vom Ansagetext auf einen Codetext umzuschalten. Dieser Codetext enthält eine größere Anzahl mit einem Bestätigungscode ausfüllbarer Pausenabschnitte, deren Codierung besonders leicht zu merken ist. Wie dies im konkreten Falle aussehen könnte, ist im folgenden anhand eines Beispiels näher erläutert.

Der Anrufbeantworter meldet sich mit nachstehender Ansage:

"Hier automatischer Anrufbeantworter
Null-Neun/Zwei/Acht/Drei-Eins/Vier/Vier/Null
Sie haben drei Minuten Sprechzeit für eine
Nachricht, bitte sprechen Sie jetzt"

Der Anrufbeantworter schaltet während der zwei mit "-" gekennzeichneten Pausenabschnitte auf Empfang und prüft mit Hilfe des Signalpegeldetektors, ob innerhalb dieser Zeiträume irgendwelche akustischen Signale vom Anrufer über die Fernsprechleitung eintreffen oder nicht. Die auch vorhandenen, aber mit "/" gekennzeichneten Pausenabschnitte werden bei der Auswertung nicht berücksichtigt. Den mit einem Bestätigungscode ausfüllbaren Pausenabschnitten("-") sei z.B. der Code 01 zugeordnet. Für den Fall, daß während der beiden Pausen kein dem Codewort 01 entsprechendes akustisches Signal ausbleibt bzw. eintrifft, führt der Anrufbeantworter den Ansagetext zu Ende und schaltet auf "Aufnahme", um gegebenenfalls eine vom Anrufer im folgenden abgegebene Nachricht aufzuzeichnen. Gibt der Anrufer jedoch im ersten Pausenabschnitt zwischen der "Null" und der Vorwahl (9283) kein akustisches Signal, dagegen im zweiten Pausenabschnitt zwischen der Vorwahl (9283) und der Rufnummer (1440) des Teilnehmeranschlusses ein akustisches Signal ab, dann schaltet der Anrufbeantworter von der Wiedergabe des Ansagetextes auf die Wiedergabe eines Codetextes um.

Der Codetext besteht in vorteilhafter Weise aus einer alphanumerischen Zeichenfolge, insbesondere Zahlen- oder Buchstabenfolge, die ebenso wie der Ansagetext z. B. von einem Sprachprozessor wiedergegeben wird, und in der n mit einem Bestätigungscode ausfüllbare Pausenabschnitte vorgesehen werden. Die Zeichenfolge selbst setzt sich aus $n + 1$ verschiedenen Elementen zusammen. Für eine Zahlenfolge der Länge $L=n+1=10$ kann der Codetext wie folgt lauten:

"Eins-Zwei-Drei-Vier-Fünf-Sechs-Sieben-Acht-Neun-Null"

Den neun mit "-" gekennzeichneten Pausenabschnitten wird über die Codierschaltung ein 9-stelliger Binärcode, z.B. 100011010, zugeordnet. Um die Wiedergabe aufgezeichneter Nachrichten auszulösen, muß der Anrufer im Falle der angegebenen Codierung in der ersten, fünften, sechsten und achten Pause ein akustisches Signal abgeben, während er in der zweiten, dritten, vierten, siebten und neunten Pause kein akustisches Signal erzeugen darf.

Der Vorteil dieses zusätzlichen Codetextes liegt vor allem darin, daß sich der Anrufer die vorgegebene Codierung sehr leicht einprägen kann. Er braucht sich lediglich die Elemente der Zeichenfolge zu merken, nach denen er jeweils ein akustisches Signal abgeben muß (hier 1 5 6 8). Dabei ist es nicht, wie im vorhergehenden Beispiel ohne Codetext, erforderlich, sich auch die entsprechende Pausennummer zu merken, da jedes Zeichen innerhalb des Codetextes nur einmal vorkommt. Sobald die entsprechenden Zeichen dieser Folge vom Anrufbeantworter bei der Abgabe des Codetextes akustisch wiedergegeben worden sind, muß der Anrufer in der jeweils darauffolgenden Pause irgendein akustisches Signal erzeugen.

Erfüllt der Anrufer diese Bedingung nicht, dann erfolgt sofort die Schlußansage, z. B.

"Das Gerät hat abgeschaltet".

0166202

Für den Fall, daß der Anrufbeantworter zum Zeitpunkt der Fernabfrage noch keine Nachrichten aufgezeichnet hat, besteht eine vorteilhafte Ausgestaltung der Erfindung darin, an den Anfang des Codetextes die Zahl "Null" zu setzen. Damit wird dem Anrufer mitgeteilt, daß noch keine Nachrichten aufgezeichnet worden sind, und daß die Fernabfrage sofort abgebrochen werden kann, um Telefonkosten zu sparen.

VERFAHREN ZUR FERNSTEUERUNG EINES
TELEFONANRUFBEANTWORTERS


PATENTANSPRÜCHE


1. Verfahren zur Fernsteuerung eines Telefonanrufbeantworters, insbesondere zu dessen Fernabfrage, bei dem akustische Signale über eine Fernsprechleitung zum Anrufbeantworter übertragen, in einer Empfängerschaltung des Anrufbeantworters detektiert und von einem ebenfalls im Anrufbeantworter angeordneten Mikrocomputer zur Steuerung bestimmter Gerätefunktionen ausgewertet werden, d a d u r c h   g e k e n n z e i c h n e t ,   daß in dem vom Anrufbeantworter an einen Anrufer abzugebenden Ansagetext m (m ≥ 2) mit einem Bestätigungscode ausfüllbare Pausenabschnitte vorgesehen werden, daß während dieser m Pausenabschnitte der Anrufbeantworter auf Empfang geschaltet und mittels der Empfängerschaltung, die als Signalpegeldetektor ausgebildet ist, das Eintreffen bzw. Ausbleiben beliebiger akustischer Signale als Digitalsignal detektiert wird, und daß den Pausenabschnitten über eine Codierschaltung des Anrufbeantworters ein m-stelliges binäres Codewort zugeordnet wird, das festlegt, in welchen der m Pausenabschnitte zur Steuerung bestimmter Gerätefunktionen ein beliebiges akustisches Signal beim Anrufbeantworter eintreffen muß oder nicht.

2. Verfahren nach Anspruch 1, d a d u r c h g e k e n n z e i c h n e t , daß nach einem dem m-stelligen Codewort entsprechenden Eintreffen bzw. Ausbleiben von akustischen Signalen während der im Ansagetext vorgesehenen m Pausenabschnitte die Ansage des Anrufbeantworters unterbrochen und der Anrufbeantworter von der Wiedergabe des Ansagetextes auf die Wiedergabe eines Codetextes umgeschaltet wird.

3. Verfahren nach Anspruch 2, d a d u r c h g e k e n n z e i c h n e t , daß in dem vom Anrufbeantworter an den Anrufer abzugebenden Codetext n (n ≥ m) mit einem Bestätigungscode ausfüllbare Pausenabschnitte vorgesehen werden, daß während dieser n Pausenabschnitte der Anrufbeantworter auf Empfang geschaltet und mittels der als Signalpegeldetektor ausgebildeten Empfängerschaltung das Eintreffen bzw. Ausbleiben beliebiger akustischer Signale als Digitalsignal detektiert wird, und daß den n Pausenabschnitten über eine Codierschaltung des Anrufbeantworters ein n-stelliges binäres Codewort zugeordnet wird, das festlegt, in welchen der n Pausenabschnitte zur Steuerung bestimmter Gerätefunktionen ein beliebiges akustisches Signal beim Anrufbeantworter eintreffen muß oder nicht.

4. Verfahren nach einem oder mehreren der Ansprüche 1 bis 3, d a d u r c h  g e k e n n - z e i c h n e t ,  daß nach einem dem m- oder m- und n-stelligen binären Codewort entsprechenden Eintreffen bzw. Ausbleiben von akustischen Signalen während der im Ansage- bzw. Codetext vorgesehenen m bzw. n Pausenabschnitte die Ansage des Anrufbeantworters unterbrochen und der Anrufbeantworter auf Wiedergabe der im Informationsspeicher gespeicherten Nachrichten umgeschaltet wird.

5. Verfahren nach einem oder mehreren der Ansprüche 2 bis 4, d a d u r c h  g e k e n n - z e i c h n e t ,  daß als Codetext eine Zahlenfolge gewählt wird.

6. Verfahren nach einem oder mehreren der Ansprüche 2 bis 4, d a d u r c h  g e k e n n - z e i c h n e t ,  daß als Codetext eine Buchstabenfolge gewählt wird.

- 4 -

7. Verfahren nach einem oder mehreren der Ansprüche 2 bis 6, d a d u r c h   g e k e n n - z e i c h n e t ,   daß als erstes Zeichen des Codetextes die Zahl "Null" gewählt wird, wenn der Informationsspeicher keine Nachrichten enthält.

8. Verfahren nach einem oder mehreren der Ansprüche 2 bis 7, d a d u r c h   g e k e n n - z e i c h n e t ,   daß für die den Pausenabschnitten zugeordneten Codeworte zur Erhöhung der Übertragungssicherheit die Binärworte, bei denen jedes Bit den gleichen Zustand aufweist ("High" oder "Low"), nicht benutzt werden.